# EUROPEAN PATENT APPLICATION

(11) **EP 4 811 153 A1**
(43) Date of publication of application: **23.09.2026**
(21) Application number: 26151742.9
(22) Date of filing: 14.01.2026
(51) Int. Cl.: G06F 16/215, G06F 16/23

(54) **DATA VALIDATION FOR SEQUENTIAL DATA**

(30) Priority: 21.03.2025 US 202519087307
(71) Applicant: Fujitsu Limited, Kawasaki-shi, Kanagawa 211-8588 (JP)
(72) Inventor: BAUER, Jesica, 94054 Santa Clara, California (US); UCHINO, Kanji, 94054 Santa Clara, California (US)
(74) Representative: Hoffmann Eitle

(57) **Abstract**

According to an aspect of an embodiment, operations may include obtaining a dataset including a plurality of sequential events and supplemental data indirectly indicating an order of sequential events. The operations may additionally include determining a portion of the supplemental data is corrupted. In some embodiments, the operations may include obtaining a validation dataset including potential values that may be included in the supplemental data. In some embodiments, the operations may further include restoring the corrupted portion of the supplemental data based on comparing the supplemental data with one or more of the potential values included in the validation dataset.

## Description

### FIELD

The embodiments discussed herein are related to data validation for sequential data.

### BACKGROUND

Sequential data is used across various industries and domains to represent ordered sequences of events, measurements, or activities occurring over time. In some instances, sequential datasets are designed to capture and analyze time-dependent patterns, trends, or relationships within a system. These datasets provide a structured framework for organizing chronological information, which may enable clear interpretation and insight extraction.

The subject matter claimed herein is not limited to embodiments that solve any disadvantages or that operate only in environments such as those described above. Rather, this background is only provided to illustrate one example technology area where some embodiments described herein may be practiced.

### SUMMARY

According to an aspect of an embodiment, operations may include obtaining a dataset including sequential events and supplemental data indirectly indicating an order of the sequential events. In some embodiments, the operations may additionally include determining a portion of the supplemental data is corrupted such that the order of the sequential events cannot be determined. In some embodiments, the operations may additionally include obtaining a validation dataset including a plurality of potential values that may be included in the supplemental data. Further, in some embodiments, the operations may additionally include restoring the corrupted portion of the supplemental data based on comparing the corrupted portion of the supplemental data with one or more of the potential values included in the validation dataset.

The object and advantages of the embodiments will be realized and achieved at least by the elements, features, and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 illustrates an environment related to generating restored data;
FIGs. 2A-2C illustrate example tables illustrating data included in example sequential datasets and validation datasets;
FIG. 3 illustrates a flowchart of a method for validating and restoring corrupted supplemental data in sequential datasets;
FIG. 4 illustrates an example flow chart of an example method of restoring a corrupted portion of a dataset that includes one or more sequential events; and
FIG. 5 illustrates a block diagram of an example computing system, all arranged in accordance with one or more embodiments of the present disclosure.

### DETAILED DESCRIPTION

Many organizations and systems rely on sequential data to represent a progression of events, activities, or measurements occurring over time. In some instances, by capturing the temporal or event-driven dynamics of various processes, sequential data may provide a structured foundation for analyzing patterns, identifying interdependencies, and gaining insights into time-dependent incidents. Widely used across industries, sequential data may enable organizations to track how incidents unfold, offering clarity into complex systems without imposing rigid execution frameworks. This versatility makes sequential data important for improving transparency, detecting anomalies, and adapting to the unique needs of diverse operational environments.

In many instances, sequential data includes events or activities recorded in chronological order, allowing for the organization of events related to a specific incident or multiple distinct occurrences. Sequential data is prevalent in various domains, including time series analysis, system monitoring, and event logging. The chronological structure of sequential data enables the identification of patterns, trends, and relationships between events as they develop over time, supporting applications such as forecasting, anomaly detection, and process optimization. For example, in the context of customer service, various events and/or activities corresponding to a particular incident may be logged in a chronological sequence. In some instances, the events and/or activities logged may be logged at time stamps when state changes are achieved-e.g., the state changes may include "open", "work in progress", "suspended", "resolved", etc.

In some instances, sequential data corresponding to various events or activities may become corrupted, which may prevent certain events from being accurately positioned in relation to others within the sequence. Corruption may manifest in multiple ways, potentially compromising the integrity and usability of the sequential data or sequential dataset. For example, portions of supplemental data associated with sequential events may become corrupted, making it difficult or impossible to determine the correct order of events. Specific issues may include improperly imported special characters that render translation impossible, unexpected system language changes, inconsistent formatting or encoding, missing timestamps or event markers, duplicate or out-of-order entries, and the loss or corruption of critical identifying information, to name just a few.

Even in instances where sequential data may not be corrupted, it may still be difficult to establish a definitive order of events. In some cases, multiple entries may bear identical timestamps, which may prevent direct chronological ordering based on those timestamps. This issue is particularly prevalent in high-frequency data environments, such as financial transactions, network security logs, or industrial sensor readings, where multiple events can occur at the same recorded moment. Additionally or alternatively, this may occur in instances where timestamp resolution is low. For example, sequential data may have a timestamp to the minute of when an event may occur. Continuing the example, multiple events occurring in the same minute will bear the same timestamp. Without additional ordering mechanisms-such as sequence numbers, event dependencies, or contextual metadata-the true sequence of events may remain ambiguous. This lack of definitive ordering may create challenges for downstream analysis, potentially obscuring causal relationships, distorting event-driven processes, and complicating efforts to reconstruct or interpret past incidents accurately.

To address some of the challenges posed by corrupted or otherwise compromised sequential data, datasets may incorporate supplemental data that indirectly indicates the order of events. This supplemental data may include unique event identifiers, contextual metadata, or additional attributes that may help to reconstruct a sequence of events corresponding to the sequential data even when any direct indicators of the order of events may be unreliable. Redundant logging mechanisms, cross-referencing multiple data sources, or utilizing derived ordering indicators-such as incremental sequence numbers-may provide alternative means of verifying chronological order. By leveraging these supplementary data elements, the integrity of sequential datasets may be preserved or improved, which may decrease disruptions that may be caused by data corruption and increase accuracy of analyses performed using the sequential data.

For example, supplemental data may include multiple fields that may provide additional context about events within a sequence. In some instances, a sequential dataset may include a "new state" column indicating the status of an entity, incident, or other overarching category associated with the sequential dataset after a given event and an "old state" column indicating a status of the entity, incident, or overarching category before the event occurred. In some instances, in a properly ordered sequence, the "new state" of one event should align with the "old state" of the subsequent event. When inconsistencies arise-such as mismatches between these fields-it may indicate errors in event ordering, data corruption, or missing entries that disrupt the intended sequence.

Supplemental data-while useful in indirectly determining an ordering of events within a sequence-may also be subject to corruption, introducing many of the same challenges that affect primary indicators in sequential datasets. Issues such as typographical errors, inconsistent formatting, missing values, mistranslations, or duplicate entries may compromise the reliability of supplemental data, making it difficult or impossible to determine the correct order of events based on the supplemental data. Without a mechanism to validate and correct these errors, supplemental data may exacerbate rather than resolve sequencing ambiguities.

The corruption of supplemental data may arise for a variety of reasons. Manual data entry errors may introduce inconsistencies, while integration between disparate systems may lead to formatting discrepancies or missing information. For instance, when data is transferred between databases or applications using different encoding standards, special characters or structural elements may be lost or altered. Additionally or alternatively, terminology and classification schemes may evolve within an organization over time, which may result in inconsistent labeling of states or events across datasets. These inconsistencies may make it difficult to interpret historical data accurately and/or align sequential data over extended periods.

Given these potential challenges, a robust approach to validating and restoring corrupted supplemental data is important to maintain an accuracy of sequential data and analyses based thereon.

One or more embodiments of the present disclosure may include systems and/or methods for validating and restoring corrupted supplemental data that may be included in sequential datasets. Restoring the corrupted supplemental data may be performed based on a comparison between a corrupted portion of the supplemental data and data included in a validation dataset, which may include potential values that may be included in the supplemental data. In some embodiments, the portion of corrupted supplemental data may be compared with one or more of the potential values included in the validation dataset. In some embodiments, a potential value in the validation dataset may be identified that may match or partially match one or more values in the corrupted portion of the supplemental data, and the corrupted values may be replaced with the identified potential value.

The supplemental dataset may include multiple key values that may individually indicate one or more of the potential values. The key values may be used to restore corrupted supplemental data by comparing the corrupted portion of the supplemental data to the key values in the validation dataset. In response to a match being found between a key value and a value in the corrupted portion of the supplemental data, the corresponding potential value indicated by the key value may be used to replace the corrupted value. This may allow for efficient restoration of corrupted data by leveraging the relationships between key values and potential values (e.g., labels) that may be defined in the validation dataset.

Embodiments of the present disclosure may improve on one or more problems introduced by corrupted supplemental data. For example, by using a validation dataset containing potential values that may be correct, the system may be able to identify and restore corrupted portions of supplemental data that would otherwise render the sequential event order indeterminable. This approach may allow for the recovery of usable data that would typically be discarded due to corruption issues.

Additionally, the use of key values in the validation dataset may provide an efficient means of matching and replacing corrupted values. Rather than relying solely on exact matches, the system may be able to identify partial matches between corrupted values and key values, allowing for more robust data restoration. This key-based matching may be particularly useful for addressing issues like language changes, special character corruption, or cases where internal values are mistakenly used instead of labels.

The data restoration process described herein may also help maintain consistency across the dataset by translating values to a unified format. This may reduce errors introduced by variations in labeling or encoding across different data sources or time periods. By producing a cleaned and consistently formatted dataset, one or more embodiments disclosed herein may significantly improve on quality and usability of sequential data for downstream analyses.

Embodiments of the present disclosure will be explained with reference to the accompanying drawings.

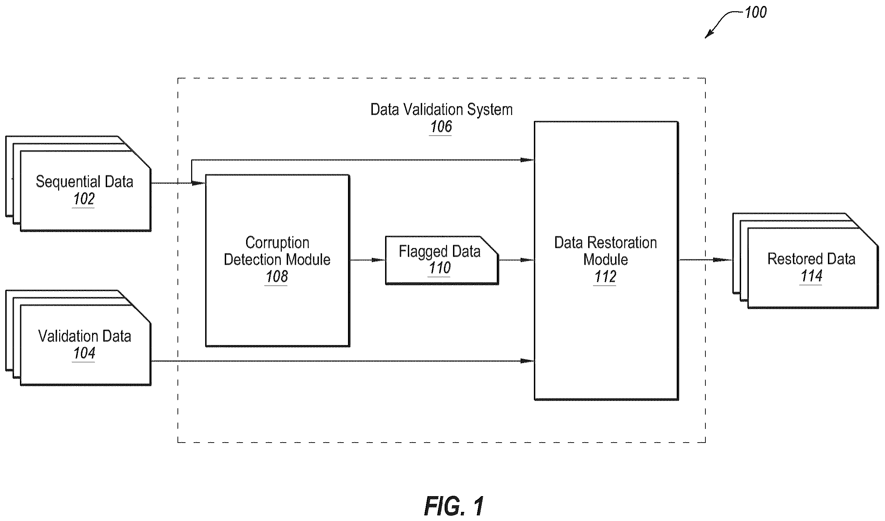

FIG. 1 illustrates an environment 100 related to generating restored data 114 to restore and/or replace otherwise corrupted data included in sequential data 102 using a data validation system 106, according to one or more embodiments of the present disclosure. In the illustrated example, the environment 100 may include the data validation system 106 which may receive or otherwise obtain the sequential data 102 and validation data 104, the data validation system 106 may additionally be configured to generate the restored data 108.

The sequential data 102 may include data and/or information that may be ordered. In some embodiments, the sequential data 102 may follow a defined sequence, where individual data elements included in the sequential data 102 are arranged according to a particular order. In some embodiments, an order associated with the sequential data 102 may be established based on timestamps, process steps, dependencies, or any other logical relationships that may indicate a correct progression of data elements included in the sequential data 102. For instance, the sequential data 102 may be organized chronologically to reflect the natural order of events corresponding to an incident as the events occurred. Additionally or alternatively, the sequential data 102 may be structured based on process steps, where individual data elements may represent a particular phase in a workflow, such as, for example, a manufacturing process, a security incident response, or a customer service interaction. In some embodiments, one or more dependencies may also play a role in defining an order of data elements included in the sequential data 102, this may occur in instances where prerequisite conditions may be met to proceed to subsequent data elements such as, for example, financial transactions which may require approval following an initial authorization request.

In some embodiments, the sequential data 102 may be used in multiple applications, including process automation, event logging, transaction records, workflow management, and other use cases where maintaining an order of data elements in the sequential data 102 may be important.

For example, a customer incident tracking system may generate and store sequential data (e.g., the sequential data 102) that may indicate a lifecycle of an incident report from initiation to resolution. Continuing the example, when a customer submits a support request, an incident ticket may be created along with a timestamp indicating a time at which the incident was opened. Subsequent actions or events may then be recorded in a sequential order, such as the assignment of the ticket to a support representative, the initial diagnosis of the issue associated with the incident, and any follow-up actions taken to troubleshoot and resolve the issue. Continuing the example, individual events included in the sequence may be included in the sequential dataset 102 in chronological order using timestamps to indicate the order of events. Once a resolution is reached, the final event in the sequence may indicate that the incident is closed, along with any relevant details such as the resolution method, time taken to resolve, and customer feedback. In this example, all data including information associated with, for example, customer feedback, may be included in the sequential dataset 102. In addition, recording the events may not, by themselves, indicate an order associated with the events in the sequential dataset. Instead, the timestamps associated with each event may directly indicate the order of events.

In some embodiments, the sequential data 102 may additionally include supplemental data that may indirectly indicate an order associated with data elements, events, activities, etc. associated with the sequential data 102. In some embodiments, the supplemental data may include metadata, data labels, key values, and/or other information that may indirectly indicate an order corresponding to the sequential data 102.

For example, again in the context of a lifecycle of a customer incident report, the sequential data 102 may include data and/or information that may directly indicate an order associated with the sequential data 102-e.g., timestamps, index values, etc. In some embodiments, the sequential data 102 may additionally include data and/or information that may indirectly indicate a correct order of events associated with the sequential data 102. The supplemental data may include, for example, data labels associated with each event. For example, a first event in the sequential data 102 may include an "open" label indicating that the incident is now open. Continuing the example, the second event associated with the incident may be "work in progress" and a third label may be "resolved." In some embodiments, a correct order of events may be determined based on the labels even if the data and/or information that is meant to directly indicate the correct order of events is corrupted or otherwise unavailable.

The sequential data 102 may be stored in one or more data structures (e.g., data storage structures) that may be designed to store the sequential data 102. In some embodiments, the data structure may be configured to maintain an ordered arrangement of data elements corresponding to the sequential data 102, this ordered arrangement may help to secure a sequence or order of the sequential data 102 for preservation and accessibility of the sequential data 102. For example, the sequential data 102 may be stored in one or more linear structures such as arrays and/or lists to store the sequential data 102. In some embodiments, arrays may provide direct index-based access to the sequential data 102. In some embodiments, one or more lists, including linked lists and doubly linked lists, may allow for flexible insertions and deletions of data in the sequential data 102 while maintaining an order associated therewith. Additionally or alternatively, other linear structures such as stacks and queues may also be used to store the sequential data 102.

In some embodiments, the sequential data 102 may be stored in one or more hierarchical and/or graph-based structures. For example, data structures like trees, such as binary trees, B-trees, and prefix trees may be used to maintain structured sequences associated with the sequential data 102 and may include lookup and retrieval operations. Additionally or alternatively, one or more directed graphs may represent complex ordered relationships within sequential data 102 where dependencies dictate a sequence or order associated with the sequential data 102. In some embodiments, the sequential data 102 may be stored in one or more time-series databases and/or log-based storage systems which may be employed to manage the sequential data 102 that may be ordered or otherwise indexed by timestamps, which may improve chronological storage and/or retrieval of the sequential data 102.

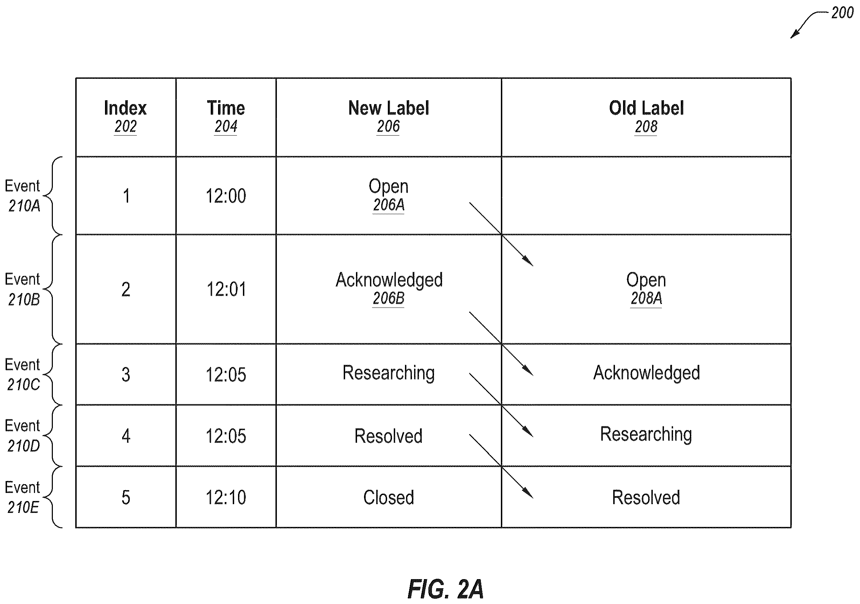

An example of sequential data 102 that may include supplemental data is shown with respect to FIG. 2A. FIG. 2A is an example dataset 200 including sequential data elements with supplemental data associated therewith. The example dataset 200 includes data that corresponds to a particular incident, such as, for example, a customer service incident (e.g., a broken phone, malfunctioning software, billing concerns, etc.). In the example dataset 200, each event or activity associated with the incident is indicated by a row of data entries-shown in FIG. 2A as events 210A-E. Individual events in the example dataset 200 may indicate a change in circumstance associated with the incident to which the example dataset 200 corresponds. Individual events 210 may serve as indicators that a change in a state associated with the incident has occurred. For example, a first event 210A may occur when the incident is initially opened. A second event 210B may occur when an analyst or employee may begin analyzing the incident, another event in a circumstance where an update is sent to the customer, another when the incident is resolved, etc.

The example dataset 200 includes four columns: an index column 202, a time column 204, a new label column 206, and an old label column 208. The index column 202 contains values that indicate the order of events within the dataset. For example, as illustrated in FIG. 2A, the first row in the index column 202 has a value of "1," indicating that the first row corresponds to the first event 210A. Similarly, the second row contains the value "2," representing the second event 210B. This sequential numbering continues through the example dataset 200, with the fifth row of the index column 202 including the value "5," indicating that it corresponds to the fifth event 210E.

The time column 204 also includes five rows, each including a timestamp representing the time at which a corresponding event occurred. In some embodiments, the order of events in the index column 202 and/or the overall sequence of events in the example dataset 200 may be derived from the timestamps recorded in the time column 204. However, in certain instances, the resolution of timestamps in the time column 204 may not be granular enough to distinguish between closely occurring events.

For example, in the example dataset 200, both the third and fourth rows include the same timestamp, "12:05," making it impossible to determine the order of the third and fourth events based solely on the timestamps included in the time column 204. In some embodiments, timestamp resolution may be predefined, with data recorded at regular intervals such as minute-by-minute, hour-by-hour, or day-by-day. In the example dataset 200, data corresponding to events is recorded every minute, events occurring within the same minute-such as the third event 210C and the fourth event 210D-share identical timestamps, preventing the determination of a definitive event sequence based on time alone.

To address this limitation, the example dataset 200 includes supplemental data in the form of labels: a new label stored in the new label column 206 and an old label stored in the old label column 208. The new label represents the state or status assigned to an event following a change, while the old label represents the prior state or status before the change occurred. For example, the first new label 206A is "open," indicating that the incident has been initiated. The second new label 206B is "acknowledged," which may indicate that the incident has been received or assigned to an employee. The corresponding old labels track the previous state of the incident. For example, the first old label 208A, associated with the second event, should match the first new label 206A, reflecting that the status transition is properly documented. This pattern continues for subsequent events throughout the example dataset 200.

The arrows depicted in the example dataset 200 illustrate that the new labels of prior events should align with the old labels of subsequent events. This correlation between current old labels and previous new labels provides an additional mechanism for establishing a correct sequence of events, particularly in cases where timestamps alone are insufficient for ordering. For instance, in the case of the third event 210C and fourth event 210D, where both share the same timestamp, the sequence can still be determined based on the supplemental label data. In some embodiments, by analyzing the relationship between old and new labels, the correct order of events may be determined, even in instances where timestamps associated with multiple events are the same.

Returning to FIG. 1, the validation data 104 may include data and/or information that may be included in the sequential data 102. In some embodiments, the sequential data 102 may include multiple data elements or values that may be expected or anticipated that those values may be present in the sequential data 102 which may be referred to collectively as potential values. In some embodiments, the potential values may be a result of a data collection process associated with the sequential data 102. For example, in the event where the supplemental data 102 includes labels that may indicate a state or status of events included in the sequential data 102 (e.g., labels included in the new label column 206 or the old label column 208 in the example dataset 200), the labels may be predetermined. Continuing the example, the predetermined labels may represent categories assigned to represent status changes associated with the supplemental data. For example, in the context of Fig. 2A, the labels may include "open", "acknowledged", "researching", "resolved", and "closed", among other potential labels. As such, the validation data 104 may include each of those labels. In some embodiments, the labels corresponding to the validation data may be generated from forms that include drop-down options. Because these drop-down menus offer a finite set of choices, each selectable option may be included in the validation dataset 104. While labels are used here as an example, the validation data 104 may include any potential value or value that may be expected in the sequential data 102.

In some embodiments, the validation data 104 may include one or more values, such as key values, that may indicate a potential value included in the sequential data 102. The key values may serve as predefined associations that map numeric or symbolic keys with specific labels or statuses, which may provide a structured way to reference and validate data entries. In some embodiments, key-value associations may help to standardize representations of states, categories, or other meaningful characteristics of the sequential data 102. In some embodiments, key values may be stored in a key-value database which may be included in the validation data 104. In some embodiments, the key value database may store these associations between key values and other characteristics, labels, attributes, etc. corresponding to the sequential data 102.

For example, in an incident tracking system, a key value of "1" may correspond to the label "Resolved," indicating that an incident has been fully addressed. Similarly, a key value of "2" may correspond to the label "Pending," signifying that an incident is still awaiting review or further action. These associations between key values and other labels in the sequential data 102 may allow for improved validation and interpretation of sequential data 102. In another example, a workflow management system may use key values where "100" represents "Task Assigned," "200" corresponds to "In Progress," and "300" denotes "Completed." These key-value mappings may enable automated processes to recognize and enforce logical transitions between states, which may help to improve data consistency and retrieval.

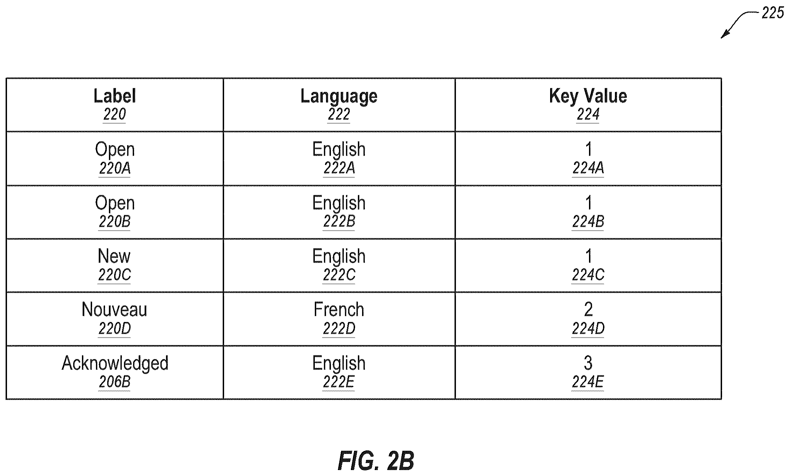

An example of validation data 104 is shown with respect to FIG. 2B. FIG. 2B is an example dataset 225, which includes potential values that may be incorporated into sequential data (e.g., the sequential data 102). The example dataset 225 includes potential values that may correspond to a specific incident or a particular type of incident (e.g., a customer service incident). In some embodiments, the example dataset 225 may include potential values associated with a client, where the client may predetermine the values that should be included in the validation data 104. Additionally or alternatively, the example dataset 225 may contain potential values related to a single incident type or multiple types of incidents, as well as other categories of sequential data.

As illustrated in FIG. 2B, the example dataset 225 includes three columns: a label column 220, a language column 222, and a value column 224. The label column 220 includes various labels that may appear in the sequential data 102. For instance, in the context of customer service incidents, labels may include "open," "pending," "working," "resolved," and "closed," each representing a state or status related to an activity or event associated with an incident. The labels stored in the label column 220 serve as categorical indicators that define various statuses within, for example, the sequential data 102.

The language column 222 indicates the language associated with the corresponding label entry in the label column 220. In some embodiments, sequential data (e.g., the sequential data 102) may be in several different languages. To account for different languages appearing in the sequential data 102, the language column 222 may capture the language associated with a particular label included in the label column 220. In some embodiments, sequential data may include multiple languages even in instances where only one language is expected. In those instances, the validation data 104 may include various languages and corresponding expected or potential labels in order to capture those potential language differences.

The key value column 224 may include a key value associated with a particular label and language combination. In some embodiments, the key value may correspond to an internal identifier or code used by a system or client to represent a particular label-e.g., the labels included in the label column 220. In some embodiments, the key values may serve as standardized references, which may allow for improved processing, retrieval, and/or validation of data within the system. In some embodiments, by using key values instead of full text labels, the dataset maintains a more compact structure, reducing storage overhead and improving lookup performance.

In some embodiments, multiple labels across different languages may map to the same key value. For example, a key value of "10" may correspond to the English label "Resolved," the Spanish label "Resuelto," and the French label "Résolu." In some embodiments, by referencing the key value rather than the full label text, the system may handle multilingual datasets in a consistent manner regardless of the language in which the data is stored and/or processed. This design is particularly useful for global applications where data is stored in multiple languages and needs to be accurately interpreted across different regions.

The rows associated with each column include information associated with the label in the label column 220. For example, the first label 220A in the label column 220 is listed as "open", the first language entry 222A in the language column 222 is listed as "English" indicating that the first label 220A is in English. Further, the first value 224A corresponding to the value column 224 is a value of "1" indicating that the key value associated with the first label 220A is "1".

The example dataset 225 is meant to be exemplary of types of information that may be included in the validation dataset. The example dataset 225 is not representative of all data and/or information that may be included in a validation dataset (e.g., the validation data 104) which may include any number of values, labels, characteristics, metadata, key values, etc. that may be potentially present in sequential data-e.g., the sequential data 102.

Returning to FIG. 1, The validation system 106 may receive or otherwise obtain the sequential data 102 and the validation data 104. The data validation system 106 may include any suitable system, apparatus, or device configured to receive or otherwise obtain the sequential data 102 and/or the validation data 104. In some embodiments, the data validation system 106 may be a stand-alone system. Additionally or alternatively, the data validation system 106 may be included in one or more other systems. Additionally or alternatively, the data validation system 106 may direct one or more other systems to perform operations.

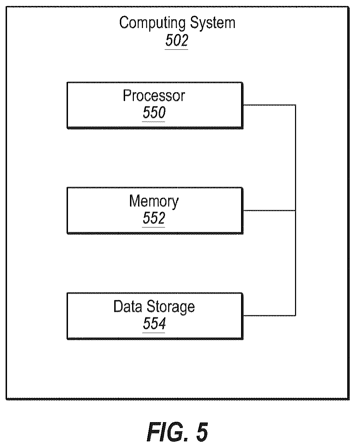

In some embodiments, the data validation system 106 may include a corruption detection module 108. In some embodiments, the corruption detection module 108 may include code and routines configured to allow a computing system to perform one or more operations. Additionally or alternatively, the corruption detection module 108 may be implemented using hardware including one or more processors, CPUs graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), and/or other processor types. In these and other embodiments, the corruption detection module 108 may be implemented using a combination of hardware and software. In the present disclosure, operations described as being performed by the corruption detection module 108 may include operations that the corruption detection module 108 may direct a corresponding computing system to perform. In these or other embodiments, the corruption detection module 108 may be implemented by one or more computing devices, such as that described in further detail with respect to FIG. 5.

In some embodiments, the corruption detection module 108 may be configured to receive or otherwise obtain the sequential data 102. In some embodiments, the corruption detection module 108 may be configured to identify one or more of the values, labels, data, metadata, etc. included in the sequential data 102. In some embodiments, the corruption detection module 108 may be configured to extract each data entry included in the sequential data 102. Additionally or alternatively, the corruption detection module 108 may be configured to identify each data entry, value, etc. that may be supplemental data included in the sequential data 102 which may include all data that may indirectly indicate a correct order associated with the sequential data 102.

In some embodiments, the corruption detection module 108 may conduct one or more comparison operations to analyze values, labels, and other data entries within the sequential data 102. This process may involve extracting and examining individual components of the supplemental data to identify potential inconsistencies or anomalies. For example, the corruption detection module 108 may determine whether expected supplemental data is present, detect missing or extraneous characters within labels, and recognize instances where values have been mistakenly placed in label fields or vice versa.

In some embodiments, to detect missing characters, the corruption detection module 108 may compare each label against known, validated entries that may be included in the sequential data 102 and/or the validation data 104. In response to a label partially matching a validated entry but is missing characters-such as "Resea?ching" instead of "Researching"-the corruption detection module 108 may flag the entry as potentially corrupted. In some embodiments, the missing characters analysis may be performed using one or more algorithms or other methods such as, for example, one or more string similarity algorithms such as Levenshtein distance, which may measure the number of insertions, deletions, or substitutions needed to transform one string into another.

In some embodiments, to identify labels in an unexpected language, the corruption detection module 108 may analyze the character encoding and linguistic patterns of a given entry. For example, in response to most of the sequential data 102 including labels in English and a subset of entries appearing in French or Spanish, the corruption detection module 108 may detect the language shift using natural language processing (NLP) techniques or predefined language models. Additionally or alternatively, the corruption detection module 108 may verify whether specific fields are expected to contain only one language and flag inconsistencies accordingly.

In some embodiments, the corruption detection module 108 may also detect inconsistent formatting by analyzing the structure and pattern of data entries. For example, in response to dates being recorded in multiple formats-such as "MM/DD/YYYY" in some instances and "YYYY-MM-DD" in others-the corruption detection module 108 may identify and flag these discrepancies. Similarly, in response to numerical values include varying decimal separators (e.g., "1,000.50" versus " 1.000,50"), the corruption detection module 108 may recognize formatting inconsistencies and flag the data entries accordingly.

In some embodiments, by comparing entries across the sequential data 102, the corruption detection module 108 may be configured to detect errors, unexpected character substitutions, and misalignments that may indicate data corruption. In some embodiments, the data corruption module 108 may flag any data entries that may corrupted. In some embodiments, the data identified as being potentially corrupted may be included in flagged data 110.

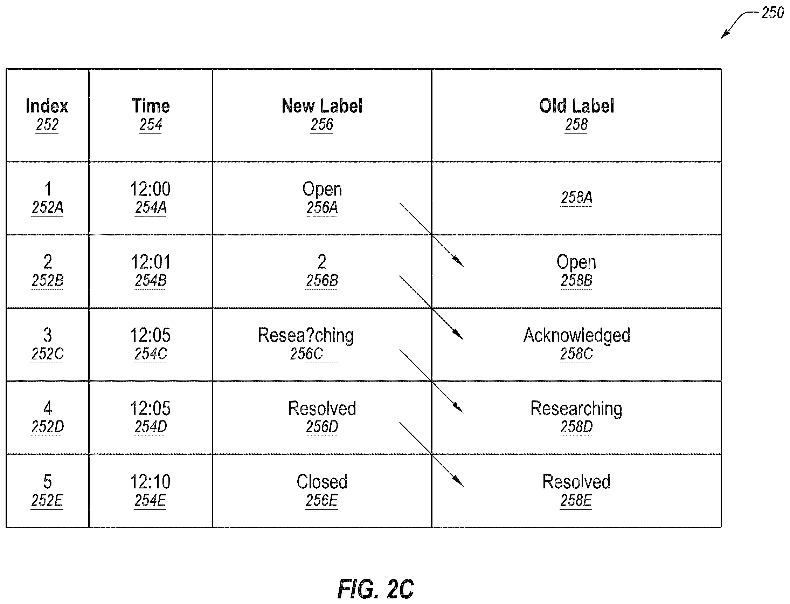

An example of corrupted data included in the sequential data 102 is illustrated in FIG. 2C of the present disclosure. FIG. 2C is an example corrupted dataset 250, which includes corrupted supplemental data. As shown, the example corrupted dataset 250 resembles the example dataset 200 described and/or illustrated further in the present disclosure, such as, for example, with respect to FIG. 2A. Like the example dataset 200, the example corrupted dataset 250 includes four columns: an index column 252 with five index values (252A-E), a time column 254 with five timestamps (254A-E), a new label column 256 with new labels (256A-E), and an old label column 258 with five old labels (258A-E).

As with the example dataset 200, the time entries in the third and fourth rows (254C and 254D) are identical. Consequently, the order of events in the corrupted dataset 250 cannot be determined solely based on timestamps, which typically serve as direct indicators of a correct sequence of events included in the corrupted dataset 250. However, in contrast to the example dataset 200, the supplemental data-specifically, the entries in the new label column 256 and the old label column 258-may not indirectly indicate the correct order of events due to the presence of corrupted data.

As a reminder, like the example dataset 200, associating entries in the old label column 258 (e.g., 258A-E) with previous entries in the new label column 256 (e.g., 256A-E) may provide an indirect indication of the correct sequence of events. The old label of a new event state should match the new label of the event's previous state. For example, old label 258B is "Open," which correctly corresponds with the new label 256A of the preceding state.

However, certain entries in the corrupted dataset 250 do not conform to this expected pattern. For instance, new label 256B is recorded as "2," and while it should match old label 258C, the corresponding old label is "acknowledged" rather than "2." Similarly, new label 256C is recorded as "Resea?ching," but instead of matching old label 258D, the corresponding old label is "Researching." These discrepancies prevent system processes, methods, and other mechanisms from determining the correct sequence of events-either through direct indicators (timestamps 254A-E) or through supplemental data (new labels 256A-E and old labels 258A-E) within the corrupted dataset 250.

In some instances, when the supplemental data is corrupted, systems may discard the entire example corrupted dataset 250. To utilize the data contained within the example corrupted dataset 250, it may be necessary to restore the supplemental data (e.g., the new labels 256A-E and the old labels 258A-E) as further described in the present disclosure, including with reference to FIGs. 1, 3, and 4.

Returning to FIG. 1, the flagged data 110 which may include, for example, the new label 256B and the new label 256C described with respect to FIG. 2C, may be sent to the data restoration module 112.

The data restoration module 112 may include code and routines configured to allow a computing system to perform one or more operations. Additionally or alternatively, the data restoration module 112 may be implemented using hardware including one or more processors, CPUs graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), and/or other processor types. In these and other embodiments, the data restoration module 112 may be implemented using a combination of hardware and software. In the present disclosure, operations described as being performed by the data restoration module 112 may include operations that the data restoration module 112 may direct a corresponding computing system to perform. In these or other embodiments, the data restoration module 112 may be implemented by one or more computing devices, such as that described in further detail with respect to FIG. 5.

In some embodiments, the data restoration module 112 may be configured to receive or otherwise obtain the flagged data 110 and the validation data 104. The data restoration module 112 may compare the flagged data 110 against the validation data 104 to determine whether the flagged data 110 may be restored. In some embodiments, the data restoration module 112 may identify that some or all of the data within the flagged data 110 is present in the validation data 104, thereby facilitating the restoration process.

For example, an entry in the flagged data 110 may include the term "Resea?ching," (much like the new label 256C described and/or illustrated with respect to FIG. 2C) while the validation data 104 may include a corresponding entry labeled "Researching." The data restoration module 112 may be configured to recognize that the "?" character may be a typographical or data corruption error rather than an intentional deviation. Given that "Resea?ching" is highly similar to "Researching" in terms of character structure and meaning, the data restoration module 112 may determine that "Researching" is the probable intended term.

In some embodiments, to make the determination that a label in the validation data 104 is close enough to the corresponding label in the flagged data 110, the data restoration module 112 may employ various techniques, such as, for example, string similarity metrics (e.g., Levenshtein distance, cosine similarity, or phonetic matching), machine learning models (e.g., BERT or LSTM-based text correction), probabilistic modeling, N-gram similarity, etc. to assess the degree of difference between the corrupted entry included in the flagged data 110 and potential valid replacements included in the validation data 104. In response to the difference falling below a predefined threshold-indicating a high likelihood that "Resea?ching" was meant to be "Researching"-the data restoration module 112 may proceed with the correction. Additionally or alternatively, the data restoration module 112 may verify the correction against multiple sources within the validation data 104 to ensure consistency. In some implementations, the data restoration module 112 may be configured to determine a certain degree of confidence before making a replacement, such as a probability score exceeding a predefined threshold or cross-referencing with other entries in the dataset to confirm the correction aligns with established patterns.

In some embodiments, the data restoration module 112 may be configured to determine that entries included in the flagged data 110 may be present in the validation data 104 but are incorrectly listed in the sequential data 102. For example, a key value may be mistakenly recorded as a label rather than displaying the actual label itself

For example, an entry in the flagged data 110 may include the value "2" in the new label column-e.g., the new label 256B described and/or illustrated further with respect to FIG. 2C. Continuing the example, the validation data 104 may associate the key value "2" with the label "acknowledged." In this case, the data restoration module 112 may recognize that the entry included in the flagged data 110 may not align with the expected format and determine that "2" is a reference to a predefined key rather than the intended label. To resolve this issue, the data restoration module 112 may compare the flagged data 110 with a reference table or lookup structure in the validation data 104 that maps key values to their corresponding labels. In response to the data restoration module 112 finding a match, the data restoration module 112 may be configured to replace the key value with the correct label. The data restoration module 112 may also cross-reference similar entries elsewhere in the sequential data 102 and/or the restoration data 104 to verify that the replacement aligns with expected data patterns.

In some embodiments, the data restoration module 112 may analyze the surrounding context of the entry in the flagged data 110 to determine that substituting the key value with its corresponding label is proper. In response to multiple potential labels existing for a given key value, the data restoration module 112 may assess additional data points to determine the most appropriate replacement.

In some embodiments, for example, to resolve ambiguity when multiple labels correspond to the same key value, the data restoration module 112 may first look to the most commonly associated label within the sequential data 102 and/or the validation data 104. In response to the sequential data 102 and/or the validation data 104 indicating that a particular label is used most frequently in association with the key value, the data restoration module 112 may prioritize that label as the correct replacement. Additionally or alternatively, the data restoration module 112 may reference a predetermined hierarchical structure, where labels are ranked according to their relevance or importance as defined in the validation data 104. In such embodiments, the data restoration module 112 may replace the key value with the highest-ranked label, ensuring consistency with predefined data governance rules that may be associated with the validation data 104.

The data restoration module 112 may also evaluate additional contextual information across the flagged data 110, the sequential data 102, and/or the validation data 104. For example, the data restoration module 112 may analyze preceding and subsequent entries in the sequential data 102 to determine whether a particular label appears in a pattern that supports its selection as the correct replacement. In some embodiments, the data restoration module 112 may check for corroborating labels in the validation data 104 to identify the most contextually appropriate correction.

For example, in response to the flagged data 110 including an entry labeled "2," the data restoration module 112 may analyze preceding and subsequent entries in the sequential data 102 to determine whether "Acknowledged" is the most likely correct replacement. If the previous entry contains a label such as "Open" and the subsequent entry is labeled "Completed," the data restoration module 112 may infer that the missing label should represent an intermediate step in a known workflow, with "Acknowledged" being the most contextually appropriate correction.

In some embodiments, to make this determination, the data restoration module 112 may employ sequence modeling techniques and/or one or more machine learning algorithms and/or models that may be trained on historical data, to predict the most likely label given surrounding entries. Additionally or alternatively, the data restoration module 112 may reference the validation data 104 to check whether "Acknowledged" may be a common label used in similar sequences. In some embodiments, in response to multiple corroborating instances existing in the validation data 104, the data restoration module 112 may assign a confidence score to the replacement and proceed with the correction in instances where the confidence level meets a predefined threshold.

In some embodiments, the data restoration module 112 may add data and/or information to the validation data 104. For example, in the context of determining and replacing "Resea?ching" with "Researching", the data restoration module 112 may include a data entry in the validation data that includes "Resea?ching" with its corresponding replacement "Researching" to make any additional changes easier for subsequent determinations.

While the examples provided in the description of the data restoration module 112 focus on key values and labels, the supplemental data included in the flagged data 110, the sequential data 102, and/or the validation data 104 may encompass a wide range of other data types that indirectly indicate the correct order of events within the sequential data 102. For example, supplemental data may include, event status indicators, categorical tags, priority levels, relationships between entries, and others. The data restoration module 112 may compare these various types of supplemental data and apply similar restorative determinations as discussed with respect to labels and key values. By analyzing patterns, cross-referencing the validation data 104, and leveraging predefined rules or hierarchical structures, the data restoration module 112 may be configured to identify inconsistencies and restore the correct order of events within the sequential data 102.

In some embodiments, the data restoration module 112 may be configured to generate restored data 114, which may serve as a corrected version of the sequential data 102. The restored data 114 may include replacement data specifically for the flagged data 110. Additionally or alternatively, the restored data 114 may encompass the entirety of the sequential data 102, incorporating both the unaltered entries and the corrected replacements for the flagged data 110. In some embodiments, the data restoration module 112 may also retain metadata or annotations indicating which entries were modified. In some embodiments, the restored data 114 may be sent to one or more systems, subsystems, modules, etc. that may perform one or more operations based on the data included in the restored data 114.

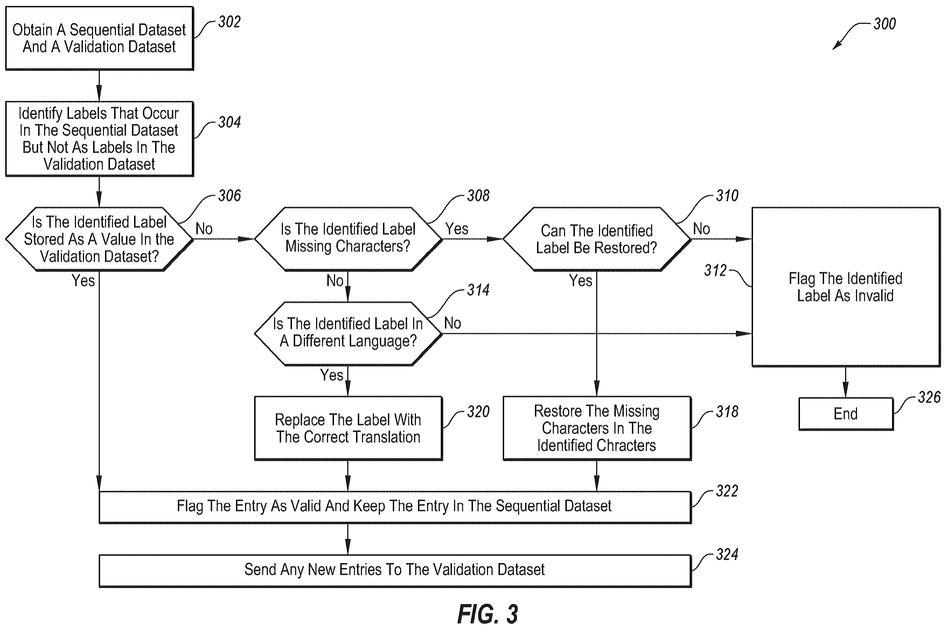

FIG. 3 illustrates a flowchart of a method 300 for validating and restoring corrupted supplemental data in sequential datasets, according to one or more embodiments of the present disclosure. The method 300 may be implemented by any suitable element of a machine, system, and/or collection of system such as, for example, the data validation system 106, the corruption detection module 108, and/or the data restoration module 112, described and/or illustrated with respect to FIG. 1. Although illustrated as discrete steps, various steps of the method 300 may be divided into additional steps, combined into fewer steps, or eliminated, depending on the desired implementation. Additionally, the order of performance of the different steps may vary depending on the desired implementation.

In some embodiments, the method 300 may include block 302. At block 302, a sequential dataset and a validation dataset may be obtained. The sequential dataset may include data corresponding to multiple sequential events and supplemental data may indirectly indicate a correct order of the plurality of sequential events. In some embodiments, the validation dataset may serve as a reference and may include potential values that may appear in the sequential dataset, including possible entries for supplemental data. In these or other embodiments, the sequential dataset may include data that is the same as and/or analogous to the sequential data 102 described and/or illustrated further in the present disclosure such as, for example, with respect to FIGs. 1, 2A, and 2C. Similarly, in some embodiments, the validation dataset may include data that is the same as and/or analogous to the validation data 104 described and/or illustrated further in the present disclosure such as, for example, with respect to FIGs. 1 and 2B.

At block 304, labels present in the sequential dataset but absent from the validation dataset may be identified. In some embodiments, the determination may include scanning one or more labels included in the sequential dataset and comparing the labels against those included in the validation dataset. In some embodiments, each label in the sequential dataset may be sequentially evaluated to determine whether it has a corresponding entry in the validation dataset. In these or other embodiments, the comparison and identification of the labels may be implemented by any suitable element of a machine, system, and/or collection of system such as, for example, the data validation system 106, the corruption detection module 108, and/or the data restoration module 112 described and/or illustrated further with respect to FIG. 1.

At decision block 306, it may be determined whether an identified label is stored as a value in the validation dataset. For example, in some cases, a label may be incorrectly recorded as a key value rather than as a label. This misclassification may be described further in the present disclosure such as, for example, with respect to FIGs. 1 and 2A-2C. In response to the identified label being included as a value (e.g., a key value) in the validation dataset, the method 300 may proceed to block 322. In response to the identified label not being included as a value in the validation dataset, the method 300 may proceed to decision block 308.

At decision block 308, the method 300 may determine whether the identified label includes one or more missing characters. In some embodiments, determining whether the identified label includes one or more missing characters may include analyzing a structure of the identified label for apparent gaps, irregularities, or unexpected symbols that may indicate missing characters. For example, special characters may be improperly converted during processing, leading to erroneous labels. For example, a label may inlcude a corrupted character such as "?" in place of "ä" in the Swedish word "färdig," the system may recognize the anomaly and flag it as potentially missing characters. In these or other embodiments, processes for identifying that the identified label may include one or more missing characters may be described and/or illustrated further in the present disclosure such as, for example, with respect to FIG. 1. In response to determining that the identified label is missing characters, the method 300 may proceed to decision block 310. In response to determining that the identified label is not missing one or more characters, the method 300 may proceed to decision block 314.

At decision block 310, it may be determined whether the identified label may be restored. In some embodiments, the determination may involve attempting to match the partial label with potential full labels in the validation dataset as described further in the present disclosure such as, for example, with respect to FIG. 1. In response to the determination that the identified label may be restored, the method 300 may proceed to block 318. In response to the determination that the identified label may not be restored, the method 300 may proceed to block 312.

At block 318, the missing characters in the identified label may be restored. In some embodiments, replacing the missing character may include replacing the partial label included in the sequential dataset with the matched full label from the validation dataset. Upon restoring the identified label, the method 300 may proceed to block 322.

At block 312, an identified label that cannot be restored is flagged as invalid. In some embodiments, flagging the identified label as invalid may include marking the label for removal or further manual review. In some embodiments, the sequential dataset may be marked as invalid and removed for further manual review. Additionally or alternatively, only the identified label may be flagged as invalid and set aside for additional, manual review. In some instances, the method 300 may then proceed to block 326 at which point, the method 300 may end.

At decision block 314, it may be determined whether the identified label is in a different language than the default or majority language in the sequential dataset. In some embodiments, determining whether the identified label is in a different language may include comparing the label to known language patterns or utilizing language detection algorithms such as those described further in the present disclosure, for example, with respect to FIG. 1. In response to the identified label being in a different language than the default or majority language in the sequential dataset, the method 300 may proceed to block 320. In response to determining that the identified label is not in a different language, the method 300 may proceed to block 312.

At block 320, the identified label may be replaced with the correct translation based on its corresponding entry in the validation dataset. In some embodiments, the validation dataset may include translations of certain terms, allowing the system to cross-reference and determine the appropriate replacement. For example, if a dataset primarily consists of English terms but includes an isolated French word, such as "Terminé" instead of "Finished" or "Completed" the discrepancy may be corrected. In some embodiments, the method 300 may proceed to block 322.

At block 322, the entry may be flagged as valid and kept in the sequential dataset. In some embodiments, the method 300 may proceed to block 324.

At block 324, any new entries that have been identified or created may be stored in the validation dataset. In some embodiments, this updated validation dataset, including the newly created entries, may be used to generate a validation dictionary. In some embodiments, the validation dictionary may encompass both the previously included data and any new values or labels generated through the data restoration method. In some embodiments, the validation dictionary may serve as a reference for future data restorations, improving consistency and improving efficient correction of similar issues that may arise in the sequential dataset or in future sequential datasets. In some embodiments, the validation dictionary may be manually edited which may provide one or more outside sources opportunity to contribute to potential labels and values that may be restored in future sequential datasets.

In some embodiments, the method 300 may then return to block 304 to continue processing any remaining labels in the sequential dataset. This iterative process may continue until all labels in the sequential dataset have been validated, restored, or flagged for further action.

In some embodiments the method 300 may identify and address various types of corruption in supplemental data, including, for example, misplaced values, missing characters, and language inconsistencies. The method 300 may be an example process to help restore the sequential dataset that would otherwise be marked as corrupt and unusable.

Modifications, additions, or omissions may be made to the method 300 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

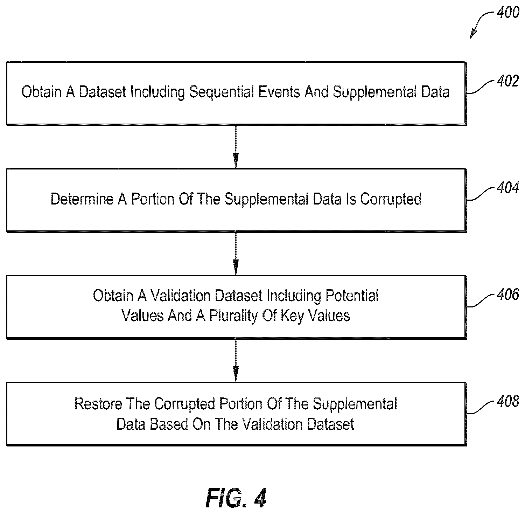

FIG. 4 illustrates an example flow chart of an example method 400 of restoring a corrupted portion of a dataset that includes one or more sequential events, in accordance with one or more embodiments of the present disclosure. The method 400 may be implemented by any suitable element of a machine, system, and/or collection of system such as the data validation system 106, the corruption detection module 108, and/or the data restoration module 112 described and/or illustrated further in the present disclosure with respect to FIG. 1. Although illustrated as discrete steps, various steps of the method 400 may be divided into additional steps, combined into fewer steps, or eliminated, depending on the desired implementation. Additionally, the order of performance of the different steps may vary depending on the desired implementation.

In some embodiments, the method 400 may include block 402. At block 402, data including sequential events may be obtained. In some embodiments, the obtained sequential data may additionally include supplemental data that may indirectly indicate an order associated with the events included in the dataset. For example, in some embodiments, the supplemental data may include a first column indicating a new state of a sequential event corresponding to multiple sequential events. Continuing the example, the supplemental data may additionally include a second column that may indicate an old state of individual sequential events of the multiple sequential events included in the dataset. In these or other embodiments, the dataset including sequential data associated with multiple events and supplemental data indirectly indicating an order associated with the events may be described and/or illustrated further in the present disclosure, such as, for example, the sequential dataset 102 described with respect to FIG. 1.

In these and/or other embodiments, any suitable device, apparatus, system, etc. may be used to obtain the dataset including the sequential events and the supplemental data at block 402. For example, the data validation system 106, the corruption detection module 108, and/or the data restoration module 112 that may be described and/or illustrated further in the present disclosure such as, for example, with respect to FIG. 1.

At block 404, it may be determined that a portion of the supplemental data is corrupted. In some embodiments, the supplemental data may include one or more markers or other indicators of the chronology or sequential order of the events included in the obtained dataset. In some embodiments, the supplemental data may be corrupted in such a manner that the order of the plurality of sequential events cannot be determined using the portion of the supplemental data. In some embodiments, in the context of the supplemental data including multiple columns indicating new and old states associated with a particular event, it may be determined that the portion of the supplemental data is corrupted in the event that a mismatch is determined between values in the first column and the second column for one or more of the events included in the sequential dataset.

In some embodiments, the portion of the supplemental data that may be corrupted may be included in the sequential dataset 102 which may be described and/or illustrated further in the present disclosure, such as, for example, with respect to FIGs. 1 and 2B. Further, one or more systems may be configured to determine that the portion of the supplemental data is corrupted. For example, the data validation system 106 and/or the corruption detection module 108 that may be described and/or illustrated further in the present disclosure such as, for example, with respect to FIG. 1.

At block 406, a validation dataset may be obtained. In some embodiments, the validation dataset may include one or more potential values and/or one or more key values associated with the obtained dataset. In some embodiments, the validation dataset may include one or more potential values that may be included in the supplemental data. For example, the validation data may include one or more possible labels associated with the supplemental data such as, for example, potential values associated with labels in the sequential dataset such as the new label 206, the old label 208, the new label 256, and/or the old label 258 described with respect to FIGs. 2A and 2B. In some embodiments, the validation data may include every possible value that may correspond to the supplemental data associated with the sequential dataset. In these or other embodiments, the validation dataset may be the same as and/or analogous to the validation dataset 104 described and/or illustrated further in the present disclosure, such as, for example, with respect to FIG. 1 and/or the example validation dataset 225 described and/or illustrated with respect to FIG. 2B.

In some embodiments, the validation dataset may include one or more key values which may individually indicate one or more potential values that may be included in the supplemental data. In some embodiments, individual key values may be associated with individual potential values that may be included in the supplemental dataset. In some embodiments, key values may be described and/or illustrated further in the present disclosure such as, for example, with respect to the validation dataset 104, the sequential dataset 200, and/or the sequential dataset 250 described and/or illustrated further in the present disclosure such as, for example, with respect to FIGs. 1, 2A, and/or 2B.

At block 408, the corrupted portion of the supplemental data may be restored. In some embodiments, restoring the corrupted portion of the supplemental data may be performed based on comparing the corrupted portion of the supplemental data with one or more of the potential values that may be included in the validation dataset. For example, in some embodiments, restoring the corrupted portion of the supplemental data may include identifying a potential value included in the validation dataset that may match or partially patch a value in the corrupted portion of the supplemental data. Continuing the example, the value included in the supplemental data may be replaced with the new identified potential value. Additionally or alternatively, the corrupted portion of the supplemental data may be restored by comparing the corrupted portion of the supplemental data with one or more key values that may be included in the validation dataset.

In some embodiments, restoring the corrupted portion of the supplemental data may include identifying a key value included in the validation dataset. In some embodiments, a value included in the supplemental data may be replaced with a potential value that may be indicated by the identified key value that may have been included in the validation dataset. In these or other embodiments, one or more systems may be configured to restore corrupted supplemental data and generate a restored dataset such as, for example, the data validation system 106 described and/or illustrated further in the present disclosure with respect to FIG. 1. In some embodiments, the restored dataset may be the same as and/or analogous to the restored dataset 108 described and/or illustrated with respect to FIG. 1.

Modifications, additions, or omissions may be made to the method 400 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

FIG. 5 illustrates a block diagram of an example computing system 502, according to at least one embodiment of the present disclosure. The computing system 502 may be configured to implement or direct one or more suitable operations described in the present disclosure. For example, the computing system 502 may be used in various elements of the above disclosure (e.g., the data validation system 106, the corruption detection module 108, and/or the data restoration module 112 of FIG. 1). The computing system 502 may include a processor 550, a memory 552, and a data storage 554. The processor 550, the memory 552, and the data storage 554 may be communicatively coupled.

In general, the processor 550 may include any suitable computer, computing entity, or processing device including various computer hardware or software modules and may be configured to execute instructions stored on any applicable computer-readable storage media. For example, the processor 550 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 5, the processor 550 may include any number of processors configured to, individually or collectively, perform or direct performance of any number of operations described in the present disclosure. Additionally, one or more of the processors may be present on one or more different electronic devices, such as different servers.

In some embodiments, the processor 550 may be configured to interpret and/or execute program instructions and/or process data stored in the memory 552, the data storage 554, or the memory 552 and the data storage 554. In some embodiments, the processor 550 may fetch program instructions from the data storage 554 and load the program instructions in the memory 552. After the program instructions are loaded into memory 552, the processor 550 may execute the program instructions.

The memory 552 and the data storage 554 may include computer-readable storage media for carrying or having computer-executable instructions or data structures stored thereon. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other non-transitory storage medium which may be used to store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007).

Combinations of the above may also be included within the scope of computer-readable storage media. Computer-executable instructions may include, for example, instructions and data configured to cause the processor 550 to perform a certain operation or group of operations.

Modifications, additions, or omissions may be made to the computing system 502 without departing from the scope of the present disclosure. For example, in some embodiments, the computing system 502 may include any number of other components that may not be explicitly illustrated or described.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.
All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method comprising:
obtaining a dataset including a plurality of sequential events and supplemental data indirectly indicating an order of the plurality of sequential events;
determining a portion of the supplemental data is corrupted in such a manner that the order of the plurality of sequential events cannot be determined using the supplemental portion;
obtaining a validation dataset including a plurality of potential values that may be included in the supplemental data; and
restoring the corrupted portion of the supplemental data based on comparing the corrupted portion of the supplemental data with one or more of the plurality of potential values included in the validation dataset.

2. The method of claim 1, wherein restoring the corrupted portion of the supplemental data comprises:
identifying a potential value of the plurality of potential values in the validation dataset that partially matches a value in the corrupted portion of the supplemental data; and
replacing the value in the corrupted portion with the identified potential value.

3. The method of claim 1, wherein the validation dataset further includes a plurality of key values individually indicating one or more of the plurality of potential values.

4. The method of claim 3, wherein restoring the corrupted portion of the supplemental data includes comparing the corrupted portion of the supplemental data with the plurality of key values included in the validation dataset.

5. The method of claim 3, wherein restoring the corrupted portion of the supplemental data comprises:
identifying a key value of the plurality of key values included in the validation dataset that matches a value in the corrupted portion of the supplemental data; and
replacing the value in the corrupted portion with a potential value of the plurality of potential values indicated by the identified key value.

6. The method of claim 1, further comprising generating a restored dataset by replacing the corrupted portion of the supplemental data with the restored data.

7. The method of claim 1, wherein the supplemental data includes a first column indicating a new state of a sequential event of the plurality of sequential events and a second column indicating an old state of the sequential event of the plurality of sequential events.

8. The method of claim 7, wherein determining the portion of the supplemental data is corrupted includes determining a mismatch between values in the first column and the second column for one or more of the plurality of sequential events.

9. A system comprising:
one or more processors; and
one or more non-transitory computer-readable storage media configured to store instructions that, in response to being executed, cause the system to perform operations, the operations comprising:
obtaining a dataset including a plurality of sequential events and supplemental data indirectly indicating an order of the plurality of sequential events;
determining a portion of the supplemental data is corrupted such that the order of the plurality of sequential events cannot be determined;
obtaining a validation dataset including a plurality of potential values that may be included in the supplemental data; and
restoring the corrupted portion of the supplemental data based on comparing the corrupted portion of the supplemental data with one or more of the plurality of potential values included in the validation dataset.

10. The system of claim 9, wherein restoring the corrupted portion of the supplemental data comprises:
identifying a potential value of the plurality of potential values in the validation dataset that partially matches a value in the corrupted portion of the supplemental data; and
replacing the value in the corrupted portion with the identified potential value.

11. The system of claim 9, wherein the validation dataset further includes a plurality of key values individually indicating one or more of the plurality of potential values.

12. The system of claim 11, wherein restoring the corrupted portion of the supplemental data includes comparing the corrupted portion of the supplemental data with the plurality of key values included in the validation dataset.

13. The system of claim 11, wherein restoring the corrupted portion of the supplemental data comprises:
identifying a key value of the plurality of key values included in the validation dataset that matches a value in the corrupted portion of the supplemental data; and
replacing the value in the corrupted portion with a potential value of the plurality of potential values indicated by the identified key value.

14. The system of claim 9, further comprising generating a restored dataset by replacing the corrupted portion of the supplemental data with the restored data.

15. One or more non-transitory computer-readable storage media configured to store instructions that, in response to being executed, cause a system to perform operations, the operations comprising:
obtaining a dataset including a plurality of sequential events and supplemental data indirectly indicating an order of the plurality of sequential events;
determining a portion of the supplemental data is corrupted such that the order of the plurality of sequential events cannot be determined;
obtaining a validation dataset including a plurality of potential values that may be included in the supplemental data; and
restoring the corrupted portion of the supplemental data based on comparing the corrupted portion of the supplemental data with one or more of the plurality of potential values included in the validation dataset.

16. The one or more non-transitory computer-readable storage media of claim 15, wherein restoring the corrupted portion of the supplemental data comprises:
identifying a potential value of the plurality of potential values in the validation dataset that partially matches a value in the corrupted portion of the supplemental data; and
replacing the value in the corrupted portion with the identified potential value.

17. The one or more non-transitory computer-readable storage media of claim 15, wherein the validation dataset further includes a plurality of key values individually indicating one or more of the plurality of potential values.

18. The one or more non-transitory computer-readable storage media of claim 17, wherein restoring the corrupted portion of the supplemental data includes comparing the corrupted portion of the supplemental data with the plurality of key values included in the validation dataset.

19. The one or more non-transitory computer-readable storage media of claim 17, wherein restoring the corrupted portion of the supplemental data comprises:
identifying a key value of the plurality of key values included in the validation dataset that matches a value in the corrupted portion of the supplemental data; and
replacing the value in the corrupted portion with a potential value of the plurality of potential values indicated by the identified key value.

20. The one or more non-transitory computer-readable storage media of claim 17, the operations further comprising generating a restored dataset by replacing the corrupted portion of the supplemental data with the restored data.
